# EUROPÄISCHE PATENTSCHRIFT

(11) **EP 3 549 351 B1**
(45) Veröffentlichungstag und Bekanntmachung des Hinweises auf die Patenterteilung: **31.03.2021**
(21) Anmeldenummer: 17817651.7
(22) Anmeldetag: 10.11.2017
(51) Int. Cl.: H04Q 9/00, H04L 27/00, H04L 27/16

(54) **VERFAHREN ZUR VERBESSERUNG DER ÜBERTRAGUNGSQUALITÄT ZWISCHEN EINEM DATENSAMMLER UND EINER MEHRZAHL AUTONOMER MESSEINHEITEN SOWIE KOMMUNIKATIONSSYSTEM**
METHOD FOR IMPROVING THE TRANSMISSION QUALITY BETWEEN A DATA COLLECTOR AND A PLURALITY OF AUTONOMOUS MEASURING UNITS, AND COMMUNICATION SYSTEM
PROCÉDÉ POUR AMÉLIORER LA QUALITÉ DE TRANSMISSION ENTRE UN COLLECTEUR DE DONNÉES ET UNE PLURALITÉ D'UNITÉS DE MESURE AUTONOMES, ET SYSTÈME DE COMMUNICATION

(30) Priorität: 03.12.2016 DE 102016014375
(43) Veröffentlichungstag der Anmeldung: 09.10.2019
(73) Patentinhaber: Diehl Metering Systems GmbH, 90451 Nürnberg (DE)
(72) Erfinder: PETKOV, Hristo, 90425 Nürnberg (DE); LAUTENBACHER, Thomas, 91058 Erlangen (DE); KAUPPERT, Thomas, 90455 Nürnberg (DE); GOTTSCHALK, Klaus, 90610 Winkelhaid (DE)
(74) Vertreter: Diehl Patentabteilung
(86) Internationale Anmeldenummer: PCT/EP2017/001313
(87) Internationale Veröffentlichungsnummer: WO 2018/099585

(56) Entgegenhaltungen:
- EP-A1- 1 215 822
- WO-A1-94/29825
- WO-A1-2005/099093
- US-A1- 2007 104 298
- US-A1- 2014 270 029

## Beschreibung

Die vorliegende Erfindung betrifft ein Verfahren zur Verbesserung der Übertragungsqualität zwischen einem Datensammler und einer Mehrzahl autonomer Messeinheiten gemäß dem Anspruch 1 sowie ein entsprechendes Kommunikationssystem gemäß dem Anspruch 13. Das erfindungsgemäße Verfahren sowie das Kommunikationssystem sind insbesondere für den Einsatz zur Verbrauchserfassung von Wärme bzw. Energie, Strom, Gas oder Wasser durch Verbrauchsmessgeräte geeignet.

### Technologischer Hintergrund

Intelligente Verbrauchsmessgeräte, auch Smart Meter genannt, sind in ein Versorgungsnetz eingebundene Verbrauchsmessgeräte z. B. für Wärme bzw. Energie, Strom, Gas, Wasser, die dem jeweiligen Anschlussbenutzer den tatsächlichen Verbrauch anzeigen und in ein Kommunikationsnetz eingebunden sind. Intelligente Verbrauchsmessgeräte haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können Versorgungsnetze wesentlich besser ausgelastet werden.

Intelligente Verbrauchsmessgeräte sind üblicherweise jeweils Wohneinheiten oder Wohnhäusern zugeordnet. Die dort anfallenden Messdaten können auf unterschiedlichste Weise ausgelesen werden. Messdaten können z. B. über das Stromnetz (Power Line) ausgelesen werden. Die Einbindung der Verbrauchsmessgeräte in ein überörtliches Netzwerk ist hierbei allerdings nicht möglich. Ferner können Messdaten per Mobilfunktechnologie in Form von Datenpaketen oder Telegrammen übertragen werden. Dies ist allerdings teuer, setzt die Installation von Mobilfunkmodulen an den Verbrauchsmessgeräten voraus und hat Nachteile bezüglich des hohen Stromverbrauchs an den einzelnen Verbrauchsmessgeräten. Ferner können Messdaten in Form von Datenpaketen oder Telegrammen auch per Funk, beispielsweise im ISM (Industrial, Scientific, Medical)-Band-Frequenzbereich oder im SRD (Short Range Devices)-Band-Frequenzbereich, übertragen werden. Diese Frequenzbereiche haben den Vorteil, dass von den Betreibern lediglich eine allgemeine Zulassung der Frequenzverwaltung notwendig ist. Allerdings besteht das Problem, dass aufgrund der Häufigkeit der Verwendung derartiger Frequenzbereiche für unterschiedlichste technische Einrichtungen wie etwa Garagentorsteuerungen, Babyphones, Alarmanlagen, WLAN, Bluetooth, Rauchwarnmelder usw. es häufig zu Störungen kommen kann. Das Sammeln der Messdaten per Funk erfolgt entweder durch ortsfeste oder mobile Datensammler (Kollektoren), an die die in den Sendern der Verbrauchsmessgeräte bereitgestellten Messdaten übertragen werden.

Aus rechtlichen Gründen dürfen von den Sendern der Verbrauchsmessgeräte lediglich Messdaten, die zu bestimmten, sehr kurzen Stichzeiträumen (Stichzeit bzw. Stichzeitpunkt inklusive Zeitabweichung) an den Datensammler übertragen werden, für die Verbrauchsauswertung herangezogen werden. Während dieser sehr kurzen Stichzeiträume übertragen die Sender aller Verbrauchsmessgeräte ihre Datenpakete an den Empfänger des Datensammlers. Außerhalb der Stichzeiträume empfangene Datenpakete werden verworfen. Hierbei kommt es durchaus häufig vor, dass sich die Übertragungen von Messdaten von Sendern unterschiedlicher Verbrauchsmessgeräte innerhalb des Stichzeitraums gegenseitig stören. Auch gebäudespezifische Besonderheiten können oftmals dazu führen, dass die Übertragung der Messedaten von den Verbrauchsmessgeräten zu dem Datensammler gestört ist. Alle diese Faktoren führen dazu, dass nur eine mäßige Wahrscheinlichkeit besteht, dass die Datenpakete in dem betreffenden Kanal durchkommen.

Eine weitere Schwierigkeit besteht darin, dass Kommunikationssysteme mit bidirektionaler Funkübertragung zwischen Datensammler und Verbrauchsmessgeräten eine sehr genaue Zeitsynchronisation zwischen den im Bereich der Verbrauchsmessgeräte befindlichen Kommunikationsmodulen und demjenigen des Datensammlers benötigen. Gerade im Bereich der Kommunikationsmodule autonomer Verbrauchsmessgeräte werden als Frequenzreferenzeinrichtungen einfache Quarze mit geringem Stromverbrauch eingesetzt. Derartige Quarze weisen aufgrund von Fertigungstoleranzen, Temperaturverhalten und Alterung Quarzfehler von 10 - 100 ppm auf. Beispielsweise führt bei einem Standartquarz ein Quarzfehler von 50 ppm zu einer Abweichung von 4,3 Sekunden pro Tag bzw. 26 Minuten pro Jahr. Daraus wiederum resultiert eine zunehmende Abweichung der Zeitsynchronisation mit der Folge eines sich zunehmend verschlechternden Empfangsverhaltens.

### Druckschriftlicher Stand der Technik

Die WO 2005/099093 A1 offenbart ein Verfahren und eine Vorrichtung zum Berechnen der Trägerfrequenz eines Senders unter Verwendung frequenzmodulierter digitaler Daten, um die Frequenzverschiebung des Senders und der lokalen Oszillatoren des Empfängers sowie die Bandbreitenanpassung des Filters des Empfängers zu kompensieren.

In der WO 94/29825 A1 wird ein Fernablese- und Telemetriesystem für Instrumente offenbart, welche mindestens eine Instrumentenverbindung umfasst, die mit einer Datenerfassungsvorrichtung und einer Fernabfragevorrichtung verbunden ist. Die Abfragevorrichtung und die Instrumentenverbindung beinhalten sowohl Funksender als auch Empfänger. Die Abfragevorrichtung weist die Instrumentenverbindung an, innerhalb bestimmter Zeitrahmen und in einem bestimmten Frequenzkanal Informationen zu übertragen. Vor der Anforderung der Übertragung von Informationen bestimmt die Abfragevorrichtung den besten verfügbaren Antwortkanal für die Übertragung von Informationen. Als Modulationsverfahren wird die Frequenzspreizung verwendet.

### Aufgabe der vorliegenden Erfindung

Die Aufgabe der vorliegenden Erfindung besteht darin, ein gattungsgemäßes Verfahren sowie ein gattungsgemäßes Kommunikationssystem zur Verfügung zu stellen, mit dem ein verbesserter Empfang zwischen Messeinheiten, insbesondere Verbrauchsmessgeräten, und einem Datensammler möglich ist.

### Lösung der Aufgabe

Die vorstehende Aufgabe wird bei dem erfindungsgemäßen Verfahren durch die Merkmale des Anspruchs 1 sowie bei dem erfindungsgemäßen Kommunikationssystem durch die Merkmale des Anspruchs 13 gelöst.

Zweckmäßige Ausgestaltungen des erfindungsgemäßen Verfahrens bzw. Kommunikationssystems sind in den abhängigen Ansprüchen wiedergegeben.

Dadurch, dass der Fehler der zweiten Frequenzeinrichtung (Quarzfehler) des zweiten Kommunikationsmoduls durch Messung mindestens eines Parameters oder einer Mehrzahl aus der Parametergruppe Bandbreite und/oder Datenrate und/oder Datenraten-Offset (bzw. Datenratenfehler oder sampling offset) und/oder Temperatur aus dem Datenpaket und/oder einer aus der zweiten Frequenzreferenzeinrichtung abgeleiteten ΔFrequenz und/oder Modulationsindex und/oder Empfangszeit und anschließende Schätzung auf der Basis der ermittelten Parameterwerte abgeleitet wird, kann auf eine Frequenzmessung einschließlich der hierfür notwendigen Hardware verzichtet werden. Die Schätzung des Fehlers kann auf einfache Weise in einem rechnerischen Näherungsmodell softwaretechnisch vorgenommen werden. Dies ist im Bereich des ersten Kommunikationsmoduls, also des Datensammlers, besonders vorteilhaft, da dort im Gegensatz zu den jeweiligen zweiten Kommunikationsmodulen, die den Messeinheiten bzw. den Verbrauchsmessgeräten zugeordnet sind, eine erhöhte Rechenleistung zur Verfügung steht. Zweckmäßigerweise kann hierbei im Rahmen der Schätzung des Quarzfehlers eine Vorabroutine vorgesehen sein, bei der überprüft wird, ob der durch Schätzung ermittelte Quarzfehler von einer solchen Qualität ist, dass er die Übertragungsqualität der Funksignale tangiert d. h. einschränkt oder nicht. Abhängig davon kann die Anpassung mindestens eines Parameters im ersten Kommunikationsmodul aus der Gruppe Datenrate und Datenraten-Offset vorgenommen werden, indem die ermittelte Parameterabweichung und damit der Fehler der zweiten Frequenzreferenzeinrichtung reduziert oder beseitigt werden. Dies ermöglicht es dem ersten Kommunikationsmodul, die Kommunikation zum zweiten Kommunikationsmodul anzupassen und hierdurch die Qualität der Übertragung zwischen erstem und zweitem Kommunikationsmodul und damit zwischen Messeinheit und Datensammler zu optimieren. Hierdurch wiederum wird die Wahrscheinlichkeit eines korrekt empfangenen Datenpakets im Rahmen der eingangs beschriebenen Betriebssituation erhöht.

Vorteilhafterweise kann die Anpassung der Frequenz der ersten Frequenzreferenzeinrichtung vorgenommen werden, indem die ermittelte Parameterabweichung und damit der Fehler der zweiten Frequenzreferenzeinrichtung reduziert oder beseitigt werden.

Zweckmäßigerweise kann die Anpassung mindestens eines Parameters im ersten Kommunikationsmodul aus der Gruppe Modulationsindex und Frequenzhub vorgenommen werden, indem die ermittelte Parameterabweichung und damit der Fehler der zweiten Frequenzreferenzeinrichtung reduziert oder beseitigt werden.

Gemäß einer zweckmäßigen Ausgestaltung der vorliegenden Erfindung wird die Bandbreite der empfangenen Funksignale gemessen und daraus der Datenratenfehler bzw. der Datenraten-Offset bestimmt. Auf der Grundlage des so ermittelten Datenraten-Offsets wird wiederum der Fehler der zweiten Frequenzreferenzeinrichtung ermittelt. Die Bandbreite wird hierbei als Maß für den Datenraten-Offset genutzt.

Alternativ oder zusätzlich ist es möglich, den Phasenhub der empfangenen Funksignale zu messen und daraus den Frequenzhub zu bestimmen. Mit dem Frequenzhub lässt sich wiederum der Fehler der zweiten Frequenzreferenzeinrichtung bestimmen.

Über den Frequenzhub kann auch anhand des Modulationsindexes der empfangenen Funksignale kann die Datenrate und der Quarzfehler mitbestimmt werden.

Die Parameter Datenraten-Offset, Frequenzhub sowie Empfangszeit können auch direkt bestimmt bzw. gemessen und anhand der Messergebnisse der Quarzfehler abgeschätzt werden.

Um eine Frequenzkorrektur vorzunehmen, sind zur Anwahl bestimmter Kenngrößen in einer Lookup-Tabelle Korrektur-Voreinstellungswerte (Registereinstellungen) für den bzw. die betreffenden Parameter vorgegeben. In Abhängigkeit der rechnerischen Ermittlung des Fehlers der zweiten Frequenzreferenzeinrichtung werden aus der vorgegebenen Menge der Korrektur-Voreinstellungs-Werte konkrete Korrektur-Voreinstellungs-Werte ausgewählt. In Abhängigkeit davon wird die Quarzfehler-Anpassung bzw. die Anpassung der ersten Frequenzreferenzeinrichtung vorgenommen.

Die jeweiligen zweiten Kommunikationsmodule (d. h. die jeweiligen Messeinheiten bzw. Verbrauchsmessgeräte) werden vorzugsweise sequenziell verarbeitet. Frequenzdaten der einzelnen Messeinheiten müssen somit nicht in eine Datenbank abgespeichert werden.

Alternativ oder zusätzlich kann in Abhängigkeit der ermittelten Parameter auch unmittelbar die Hardware der ersten Frequenzeinrichtung angepasst werden. Dies kann beispielsweise dadurch erfolgen, dass eine Einstellung an der Hardware (z. B. durch Anlegung einer Spannung an einer Kapazitätsdiode) des ersten Kommunikationsmoduls vorgenommen wird.

Dadurch, dass der Fehler des vom ersten Kommunikationsmodul empfangenen Funksignals erfindungsgemäß in letzterem reduziert oder beseitigt wird und ein entsprechend korrigiertes Funksignal an das zweite Kommunikationsmodul zurückgesendet wird, kann die bidirektionale Kommunikation zwischen dem jeweiligen Zähler und dem Datensammler optimiert werden.

Dadurch, dass der Modulationsindex als Funkparameter bestimmt und angepasst wird, wird eine fortlaufende Erhöhung des Modulationsindexfehlers über die Länge des jeweiligen Datenpakets hin vermieden. Daraus resultiert der Vorteil, dass aufgrund der Anpassung des Modulationsindex bzw. des Modulationsindexfehlers größere Datenpaketlängen als bisher möglich werden können. Dies ermöglicht es wiederum, zusätzliche Daten, z. B. Sicherheitsdaten bzw. kryptographische Daten für eine gute Verschlüsselung, mit zu übertragen. Dies ist vor allem bei einer sogenannten FSK- bzw. MSK-Modulation von besonderem Vorteil.

Zweckmäßigerweise kann beim Empfang des Datenpakets die Empfangsfrequenz am Datensammler derart eingestellt werden, dass das Signal in der Mitte des Empfangsfensters liegt. Ferner kann die Messeinheit mit der Einstellung dem Datensammler antworten. Dadurch wird gewährleistet, dass die Prozedur sequentiell, d. h. Messeinheit für Messeinheit, abgearbeitet werden kann.

Ferner kann das zweite Kommunikationsmodul eine dritte Frequenzreferenzeinrichtung mit einem frequenzstabileren Quarzoszillator, z. B. ein HF Quarz, umfassen. Dadurch kann die Frequenz der frequenzstabileren dritten Frequenzreferenzeinrichtung zur Ableitung der ΔFrequenz der zweiten Frequenzreferenzeinrichtung herangezogen werden, d. h. die Frequenz der frequenzstabileren dritten Frequenzreferenzeinrichtung dient der zweiten Frequenzreferenzeinrichtung als Frequenzreferenzpunkt.

Des Weiteren betrifft die vorliegende Erfindung, auch nebengeordnet beansprucht, ein Kommunikationssystem gemäß des Anspruchs 13. Dieses Kommunikationssystem ist dadurch gekennzeichnet, dass das erste Kommunikationsmodul eine Messeinrichtung zur Messung mindestens eines Parameters des vom zweiten Kommunikationsmodul empfangenen Funksignals aus folgender Parameter-Gruppe Bandbreite und/oder Datenrate und/oder Datenraten-Offset (bzw. Datenratenfehler) und/oder Temperatur aus dem Datenpaket und/oder einer aus der zweiten Frequenzreferenzeinrichtung (18) abgeleiteten ΔFrequenz und/oder Modulationsindex und/oder Empfangszeit aufweist, und das erste Kommunikationsmodul eine Steuer- und Recheneinheit umfasst, die dazu ausgebildet ist, einen Fehler der zweiten Frequenzreferenzeinrichtung auf der Grundlage der Parameter-Messwerte oder daraus abgeleiteten Werten rechnerisch zu ermitteln.

Erfindungsgemäß ist das erste Kommunikationsmodul zur Reduzierung oder Beseitigung der Fehler der zweiten Frequenzreferenzeinrichtung oder der davon abhängige Parameterfehler ausgebildet, indem das erste Kommunikationsmodul zur Anpassung mindestens eines Parameters aus der Gruppe Datenrate und Datenraten-Offset hergerichtet ist.

Ferner kann die erste Frequenzreferenzeinrichtung zur Anpassung der eigenen Frequenz ausgebildet sein, so dass der Fehler der zweiten Frequenzreferenzeinrichtung oder der davon abhängige Parameterfehler reduziert oder beseitigt werden.

### Beschreibung der Erfindung anhand von Ausführunqsbeispielen

Nachstehend werden besondere Ausgestaltungen der vorliegenden Erfindung unter Bezugnahme auf Zeichnungsfiguren näher erläutert. Es zeigen:
- Fig. 1: eine stark vereinfachte, schematische Darstellung eines Datensammlers sowie mehrerer zugehöriger Verbrauchsmessgeräte;
- Fig. 2: eine stark vereinfachte, schematische Darstellung des Grundprinzips der vorliegenden Erfindung;
- Fig. 3: eine Auflistung der zu bestimmenden Funkparameter;
- Fig. 4: eine detailliertere Darstellung einer ersten Ausgestaltung des Datensammlers als Bestandteil des Kommunikationssystems gemäß der Erfindung;
- Fig. 5: eine stark vereinfachte, schematische Darstellung einer Lookup-Tabelle;
- Fig. 6: eine weitere Ausgestaltung des Datensammlers als Bestandteil des Kommunikationssystems gemäß der Erfindung;
- Fig. 7: eine stark vereinfachte, schematische Darstellung eines Verbrauchsmessgerätes mit zwei Frequenzreferenzeinrichtungen sowie eine Darstellung der Frequenzen der jeweiligen Frequenzreferenzeinrichtung, sowie
- Fig. 8: eine stark vereinfachte, schematische Darstellung der Zeitabstände zwischen zwei Datenpaketen.

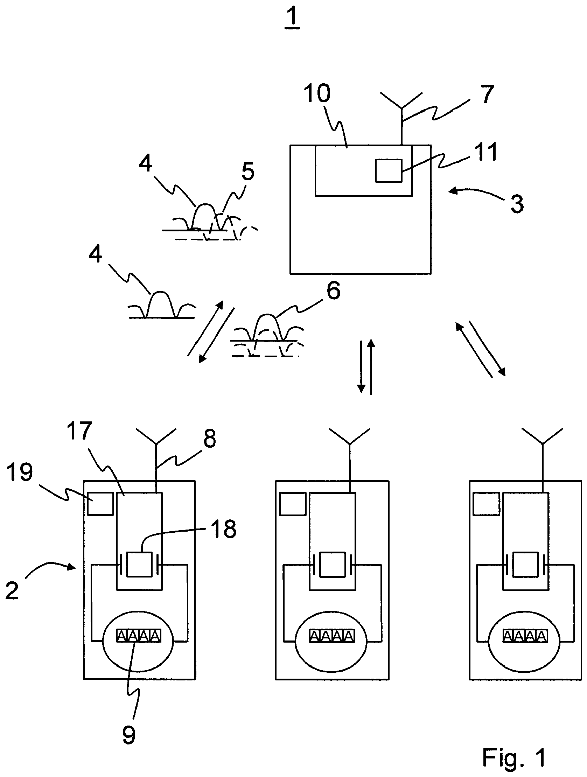

Bezugsziffer 1 in Fig. 1 bezeichnet ein Kommunikationssystem, welches mehrere Messeinheiten bzw. Verbrauchsmessgeräte 2 umfasst. Bei den Verbrauchsmessgeräten 2 handelt es sich beispielsweise um Wasserzähler, Energie- bzw. Wärmezähler, Gaszähler, Stromzähler oder dgl. Derartige Verbrauchsmessgeräte 2 arbeiten autonom, d. h. sind mit einer eigenen Stromversorgung (Batterie) ausgestattet. Sie befinden sich üblicherweise in der Hausinstallation, z. B. im Keller eines Einfamilienhauses oder in der jeweiligen Etage eines Mehrfamilienhauses. Das jeweilige Verbrauchsmessgerät 2 verfügt in der Regel über eine Anzeige 9, die ein Ablesen des aufsummierten Zählerstandes des Verbrauchsmessgeräts 2 ermöglicht. Jedes Verbrauchsmessgerät 2 besitzt des Weiteren ein Kommunikationsmodul (zweites Kommunikationsmodul 17), eine Steuer- und Recheneinheit 19, einen Quarzoszillator (zweite Frequenzreferenzeinrichtung 18) sowie eine Antenne 8.

Des Weiteren umfasst das Kommunikationssystem 1 einen Datensammler 3 mit einer Frequenzreferenzeinrichtung 11, welcher entfernt von den einzelnen Verbrauchsmessgeräten 2, z. B. am Dach eines Hauses, installiert ist und dazu dient, Daten in Form von Datenpaketen von den jeweiligen zugeordneten Verbrauchsmessgeräten 2 zu erhalten. Die Datenpakete werden durch Funktelegramme 4 gebildet, die zu bestimmten Zeiten vom Verbrauchsmessgerät 2 zum Datensammler 3 übertragen werden. Vorzugsweise werden für die Übertragung das SRD-Band und/oder das ISM-Band verwendet, welche lizenzfreie Frequenzbandbreiten für verschiedenste Anwendungen ermöglichen.
Das von dem jeweiligen Verbrauchsmessgerät 2 gesendete Funktelegramm 4 wird durch den Quarzoszillator des betreffenden Verbrauchsmessgeräts 2 festgelegt. Hat der Quarzoszillator einen Fehler, so wird dieser Fehler über das Funktelegramm 4 zwangsläufig mit zum Datensammler 3 übertragen.

Aufgrund des Fehlers des Quarzoszillators des Verbrauchsmessgeräts 2 besitzt das Funktelegramm 4 im Vergleich zu dem Datensammler 3 eine andere Frequenz oder liegt in einem anderen Kanal. Dies wird in Fig. 1 durch das "vom Datensammler 3 erwartete" gestrichelt dargestellte Funktelegramm 5 sinnbildlich dargestellt. Bei einer idealen Kommunikation zwischen Verbrauchsmessgerät 2 und Datensammler 3 müsste das Verbrauchsmessgerät 2 ein dem Funktelegramm 5 entsprechendes Funktelegramm an den Datensammler 3 senden.

Die Idee der vorliegenden Erfindung besteht nun darin, dass der Datensammler 3 bei Empfang des Funktelegramms 4 des jeweiligen Verbrauchsmessgeräts 2 einen besonderen Funkparameter oder eine Mehrzahl besonderer Funkparameter misst, der Datensammler 3 auf der Grundlage der gemessenen Funkparameter näherungsweise eine Schätzung des Fehlers der zweiten Frequenzreferenzeinrichtung 18 vornimmt und seine eigene Frequenzreferenzeinrichtung 11 derart verändert, dass ein festgestellter Unterschied des oder der betreffenden Parameter entfällt oder zumindest reduziert wird. Der Datensammler 3 passt sich somit hinsichtlich seiner eigenen Frequenz bzw. derjenigen des Frequenzkanals derart an, dass die Frequenzen des zweiten Kommunikationsmoduls 17 sowie ersten Kommunikationsmoduls 10, zumindest im Wesentlichen, übereinstimmen. Ein entsprechend vom Datensammler 3 angepasstes Funktelegramm 6 wird vom Datensammler 3 zurück zum Verbrauchsmessgerät 2 gesendet (downlink). Auf diese Weise weiß das betreffende Verbrauchsmessgerät 2, dass eine aufeinander abgestimmte, verbesserte Kommunikation erfolgen kann. Die betreffende Anpassung des Funktelegramms 6 zeigt sich darin, dass letzteres mit dem vom Datensammler erwarteten (gestrichelt dargestellten) Funktelegramm in seiner Frequenzlage übereinstimmt.

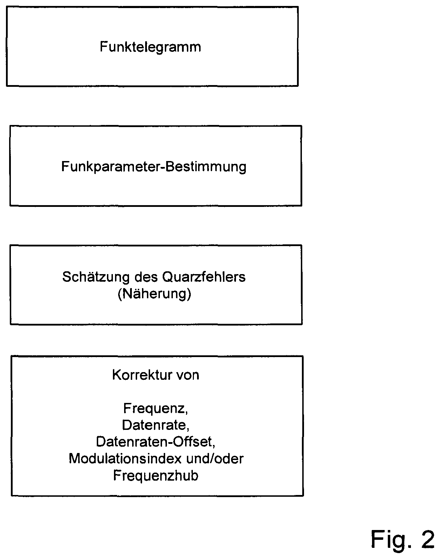

Fig. 2 zeigt in einem Blockschaltbild die Grundidee. Das vom Verbrauchsmessgerät 2 gesendete Funktelegramm 4 wird hinsichtlich mindestens eines fest vorgegebenen Funkparameters untersucht und anhand des bzw. der Funkparameter eine Schätzung des Fehlers des Quarzoszillators des jeweiligen Verbrauchsmessgeräts 2 vorgenommen. Die Quarzfehlerschätzung erfolgt hierbei vorzugsweise über ein mathematisches Modell, z. B. in Form einer Integraltransformation, vorzugsweise in Form einer Fourier-Transformation oder Spektraltransformation. Diese näherungsweise Schätzung kann in vorteilhafter Weise softwaretechnisch durchgeführt werden. Beispielsweise steht hierzu die Rechnerleistung einer Steuer- und Recheneinheit 13 des Datensammlers 3 zur Verfügung. Alternativ kann der Datensammler 3 auch mit einem externen Steuer- und Rechenglied (beispielsweise einem Cloud-Computer) verbunden sein.

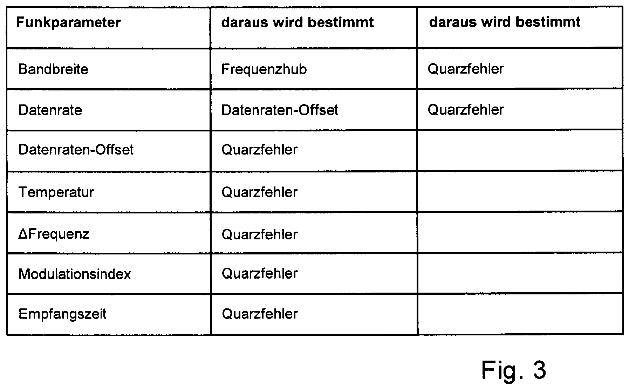

Die Tabelle in Fig. 3 zeigt eine Zusammenstellung erfindungsgemäß geeigneter Funkparameter zur Schätzung des Fehlers des Quarzoszillators des Verbrauchsmessgeräts 2. Als Funkparameter kann z. B. die Bandbreite der übertragenen Funksignale herangezogen und daraus der Frequenzhub bestimmt werden. Über den Frequenzhub kann wiederum auf den Quarzfehler geschlossen werden.

Alternativ oder zusätzlich kann als Funkparameter auch der Datenraten-Offset herangezogen werden, also ein Unterschied zwischen der tatsächlich übertragenen Datenrate und der vom Datensammler 3 erwarteten Datenrate. Der Datenraten-Offset führt dazu, dass das betreffende Symbol zu einem früheren oder späteren Zeitpunkt im Datensammler 3 erfasst wird. Hier kommt es durch den falschen Zeitpunkt auch zu einem Phasenfehler, der die Performance der Übertragung verschlechtert. Aus dem Datenraten-Offset kann wiederum auf den Quarzfehler näherungsweise geschlossen werden.

Auch Unterschiede in der Empfangszeit des Funksignals machen es möglich, direkt auf den Quarzfehler zu schließen.

Aus dem Funkparameter Frequenzhub kann auch eine Abweichung im Modulationsindex festgestellt und daraus der Quarzfehler bestimmt werden.

Das Verbrauchsmessgerät 2 bestimmt die Temperatur mittels einer Temperaturmesseinrichtung, z. B. einem Temperatursensor, und schickt die Temperaturinformation über das zweite Kommunikationsmodul 17 an das erste Kommunikationsmodul 10 des Datensammlers 3. Aus den Temperaturdaten kann der Datensammler 3 den Quarzfehler bestimmen, indem er beispielsweise die Temperaturwerte mit in einer Kalibrierungstabelle hinterlegten Temperaturwerten abgleicht.

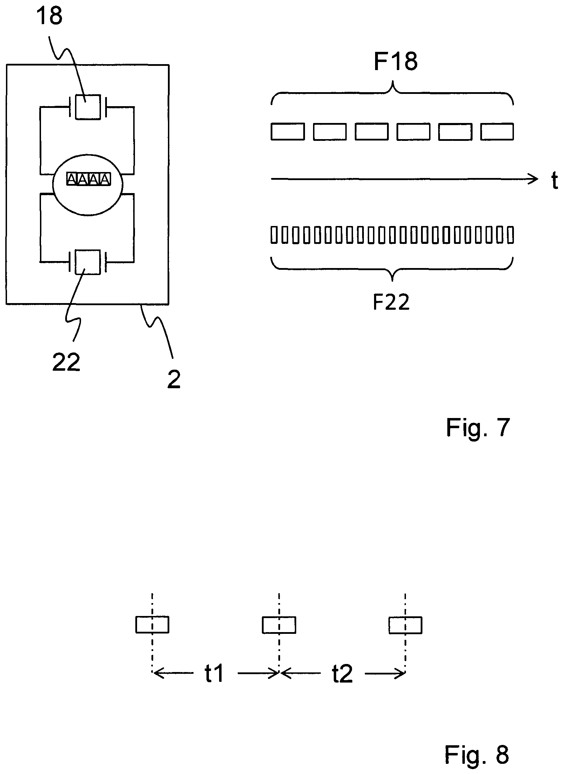

Ferner kann das Verbrauchsmessgerät 2 auch gemäß Fig. 7 eine dritte Frequenzreferenzeinrichtung 22 umfassen, die bei einem in der Regel erhöhten Energieverbrauch eine bessere Frequenzstabilität als die zweite Frequenzreferenzeinrichtung 18 aufweist. Beispielsweise kann als zweite Frequenzreferenzeinrichtung 18 ein Uhrenquarz mit einer Taktfrequenz von etwa 32 kHz und als dritte Frequenzreferenzeinrichtung 22 ein HF-Quarz mit einer Taktfrequenz von etwa 20 MHz vorgesehen sein. Die zweite Frequenzreferenzeinrichtung 18 wird hierbei dauerhaft betrieben und die dritte Frequenzreferenzeinrichtung 22 nur zeitweise, um die Frequenz, die Periodendauer oder eine andere ableitbare Größe der dritten Frequenzreferenzeinrichtung 22 als Taktmaß heranzuziehen und daraus den Quarzfehler der zweiten Frequenzreferenzeinrichtung 18 zu ermitteln. Hierzu kann beispielsweise die Frequenz F18 der zweiten Frequenzreferenzeinrichtung 18 mit der Frequenz F22 der frequenzstabileren dritten Frequenzreferenzeinrichtung 22 verglichen werden. Eine Abweichung bzw. ein Frequenzunterschied ΔFrequenz z. B. der ermittelten Frequenz F18 vom erwarteten Frequenzwert der Frequenz 18 lässt dementsprechend direkte Rückschlüsse auf den Quarzfehler des Quarzoszillators der zweiten Frequenzreferenzeinrichtung 18 zu.

Ferner sind die zeitlichen Abstände zwischen den Datenpaketen bekannt, z. B. 5 Sekunden. Die Begrenzungen der Zeitabstände t1, t2 zwischen den Datenpaketen können sich gemäß Fig. 8 als Zeitinformation bzw. Zeitsignal oder Zeitreferenz im mittleren Bereich des Datenpakets befinden. Die Zeitabstände t1, t2 können dadurch möglichst genau als Zeitabstände t1' bzw. t2' ermittelt werden und mit den erwarteten Zeitabständen t1 bzw. t2 verglichen werden. Über die ermittelten Zeitabstände t1' bzw. t2' und ΔFrequenz des Quarzoszillators der zweiten Frequenzreferenzeinrichtung 18 kann anschließend die Frequenz bestimmt werden, z. B. durch: Frequenz = t1' + ΔFrequenz.

Im Bedarfsfall können sämtliche vorgenannten Funkparameter für die Bestimmung des Quarzfehlers herangezogen werden oder aber eine Kombination eines Teils davon.

Nach Durchführung der Berechnung des Quarzfehlers wird vorzugsweise im Rahmen einer Subroutine zunächst überprüft, ob der Quarzoszillator des Verbrauchsmessgeräts 2 einen Performance-einschränkenden Einfluss hat. Falls der Fehler lediglich geringfügig ist, wird keine Anpassung vorgenommen. Falls der Fehler jedoch größer ist, wird eine Anpassung im Datensammler 3 vorgenommen.

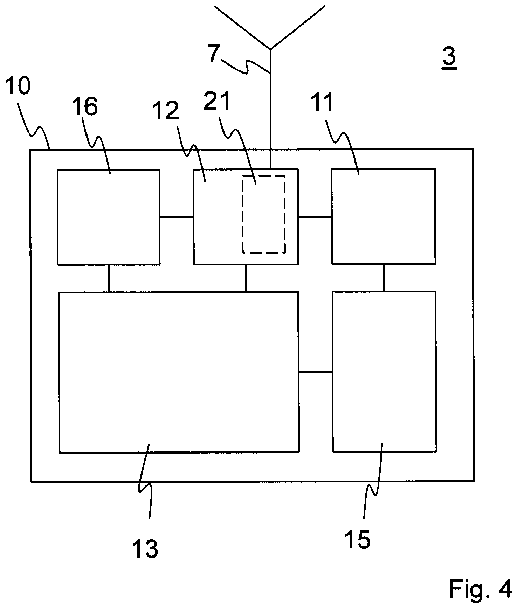

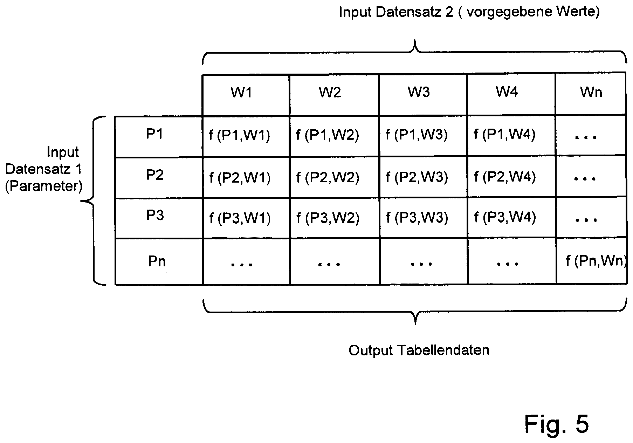

Fig. 4 zeigt eine zweckmäßige Ausgestaltung des ersten Kommunikationsmoduls 10 des Datensammlers 3 in stark vereinfachter, allerdings vergrößerter Darstellung. Das Kommunikationsmodul 10 umfasst ein Sende- und Empfangsteil 12 mit Antenne 7, einen Quarzoszillator (erste Frequenzreferenzeinrichtung 11), der mit einer Steuer- und Recheneinheit 13 in Verbindung steht und vorzugsweise eine Anzeige 16. Das Sende- und Empfangsteil 12 umfasst eine Messeinrichtung 21 zur Erfassung der oben genannten Funkparameter. Ferner ist eine sogenannte Lookup-Tabelle 15 vorgesehen, welche es ermöglicht, eine Änderung der Frequenz des Datensammlers 3 in Abhängigkeit des bzw. der gemessenen Parameter des Funksignals vorzunehmen. Die Lookup-Tabelle 15 umfasst gemäß Fig. 5 mehrere Eingänge für die jeweiligen vom Datensammler 3 gemessenen oder weiter verarbeiteten Parameterdaten P1-Pn. Ferner umfasst die Lookup-Tabelle 15 eine Mehrzahl von empirischen Eingabewerten W1-Wn, die geeignet sind, mit den Parametereingangsdaten in Korrelation stehen. Abhängig von den jeweiligen Parametereingangsdaten wird somit über die Lookup-Tabelle 15 ein geeignetes Ausgangssignal an die erste Frequenzreferenzeinrichtung 11 des Datensammlers 3 gegeben, sodass die Frequenz der ersten Frequenzreferenzeinrichtung 11 des Datensammlers 3 entsprechend angepasst werden kann.

Die Anpassung der Frequenz der ersten Frequenzreferenzeinrichtung 11 des Datensammlers 3 in Bezug auf das jeweilige Verbrauchsmessgerät 2 erfolgt sequentiell d. h. von Verbrauchsmessgerät zu Verbrauchsmessgerät bis mit allen Verbrauchsmessgeräten 2 ein entsprechender Abgleich vorgenommen worden ist. Es ist nur ein Funkparameter-Messwert zu speichern. Eine Datenbank zum Abspeichern einer Vielzahl von Funkparameter-Werten ist nicht notwendig.

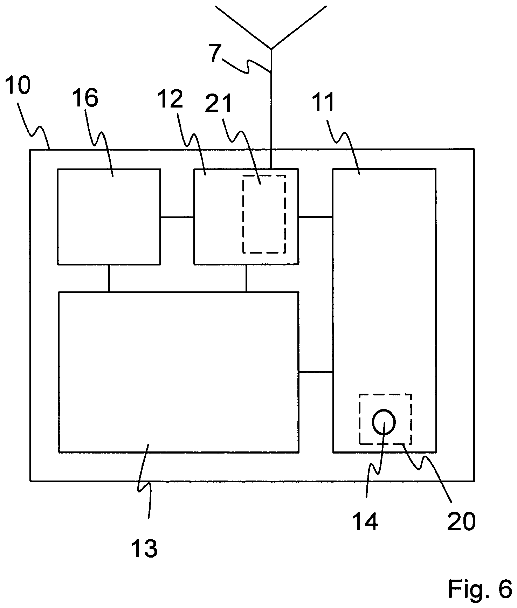

Anstelle oder zusätzlich zu der Lookup-Tabelle 15 kann zur Frequenzanpassung auch eine Veränderung der Hardware der ersten Frequenzreferenzeinrichtung 11 mittels eines manuell bedienbaren Verstellelements, z. B. mittels einer mit einem Stellglied 14 versehenen Kapazitätsdiode 20, vorgesehen sein, wie sich dies aus der Darstellung gemäß Fig. 6 ergibt.

Im Rahmen der vorliegenden Erfindung kann vorzugsweise eine MSK-Modulation (Minimum Shift Keying Modulation) verwendet werden, die kohärent demoduliert ist. Die MSK-Modulation wird wiederum durch eine FSK-Modulation (Frequency Shift Keying Modulation) generiert, die einen Modulationsindex von 0,5 hat. Um solche Modulationsarten kohärent dekodieren zu können, muss die Phase der Symbole bekannt sein. Ist die Phase des Symbols im Verbrauchsmessgerät 2 verfälscht, führt dies zu einer Degradierung der Performance (gemessen in Störer-Robustheit oder Empfindlichkeit) bis zum Verlieren der Funktionalität. Insbesondere wird die Phase durch den sogenannten Modulationsindexfehler verfälscht. Die zwei FSK-Frequenzen werden im Abstand von ΔF (Frequenzhub) um den Träger gesendet. Der Modulationsindexfehler ist definiert als 2ΔF (Frequenzhub) x T (Symboldauer). Durch die Modulationsindexfehler werden die zwei FSK-Frequenzen leicht verfälscht. Dies führt zu einem sich fortpflanzenden Phasenfehler im Empfänger. Je größer das Telegramm ist, desto weiter akkumuliert sich der Modulationsindexfehler. Damit stellte der Modulationsindexfehler bisher eine Grenze der Telegrammlänge dar. Ändert sich der Frequenzhub wegen eines Fehlers des Quarzoszillators 18 des zweiten Kommunikationsmoduls 17, so bedingt dies eine Veränderung des Modulationsindexfehlers. Die Erfindung ermöglicht es, den Modulationsindex bzw. den Modulationsindexfehler am Datensammler einzustellen bzw. zu korrigieren (bzw. zu reduzieren), wodurch es möglich wird, erheblich längere Funktelegramme als bisher zu senden. Vorzugsweise können größere Paketlängen bzw. längere Funktelegramme dazu genutzt werden, zusätzliche Verschlüsselungen in die Funktelegramme mit aufzunehmen, wodurch sich eine verbesserte Übertragungssicherheit bei gleichzeitig verbesserter Übertragungsqualität ergibt.

### BEZUGSZEICHENLISTE

- 1: Kommunikationssystem
- 2: Verbrauchsmessgerät
- 3: Datensammler
- 4: vom Verbrauchsmessgerät gesendetes Funktelegramm
- 5: vom Datensammler erwartetes Funktelegramm
- 6: vom Datensammler angepasstes Funktelegramm
- 7: Antenne
- 8: Antenne
- 9: Anzeige
- 10: erstes Kommunikationsmodul
- 11: erste Frequenzreferenzeinrichtung (Datensammler)
- 12: Sende- und Empfangsteil (Datensammler)
- 13: Steuer- und Recheneinheit (Datensammler)
- 14: Stellglied
- 15: Lookup-Tabelle
- 16: Anzeige
- 17: zweites Kommunikationsmodul (Verbrauchsmessgerät)
- 18: zweite Frequenzreferenzeinrichtung (Verbrauchsmessgerät)
- 19: Steuer- und Recheneinheit (Verbrauchsmessgerät)
- 20: Kapazitätsdiode
- 21: Messeinrichtung
- 22: dritte Frequenzreferenzeinrichtung (Verbrauchsmessgerät)
- F18: Frequenz der zweiten Frequenzreferenzeinrichtung
- F22: Frequenz der dritten Frequenzreferenzeinrichtung

- t: Zeit
- t1: Zeitabstand
- t2: Zeitabstand

## Patentansprüche

1. Verfahren zur Verbesserung der Übertragungsqualität zwischen einem Datensammler (3) und einer Mehrzahl von Messeinheiten, insbesondere Verbrauchsmessgeräten (2), in einem Kommunikationssystem (1) mit bidirektionaler Funkübertragung mit
einem ersten Kommunikationsmodul (10), wobei das erste Kommunikationsmodul (10) dem Datensammler (3) zugeordnet ist,
zwei oder mehreren zweiten Kommunikationsmodulen (17), wobei jedes zweite Kommunikationsmodul (17) jeweils einer Messeinheit zugeordnet ist,
wobei das zweite Kommunikationsmodul (17) dazu vorgesehen ist, Daten mittels Funksignalen, vorzugsweise in Form von mindestens einem, vorzugsweise eine Mehrzahl von Datenpaket(en) umfassenden Funktelegrammen (4), an das erste Kommunikationsmodul (10) zu senden,
wobei das erste Kommunikationsmodul (10) dazu vorgesehen ist, die Daten von dem zweiten Kommunikationsmodul (17) zu empfangen,
wobei das erste Kommunikationsmodul (10) eine erste Frequenzreferenzeinrichtung (11) umfasst,
wobei das zweite Kommunikationsmodul (17) eine zweite Frequenzreferenzeinrichtung (18) umfasst,
wobei die jeweils von dem zweiten Kommunikationsmodul (17) im Rahmen der Datenübertragung an das erste Kommunikationsmodul (10) übertragenen Funksignale von der zweiten Frequenzreferenzeinrichtung (18) abhängig sind, wobei
eine Messung mindestens eines Parameters des vom jeweiligen zweiten Kommunikationsmoduls (17) ausgesendeten und vom ersten Kommunikationsmodul (10) empfangenen Funksignals aus folgender Parameter-Gruppe
Bandbreite,
Datenrate,
Datenraten-Offset,
Temperatur aus dem Datenpaket,
einer aus der zweiten Frequenzreferenzeinrichtung (18) abgeleiteten ΔFrequenz,
Modulationsindex und/oder
Empfangszeit
durch das erste Kommunikationsmodul (10) erfolgt, wobei
ein Abschätzen eines Fehlers der zweiten Frequenzreferenzeinrichtung (18) auf der Grundlage der Parameter-Messwerte oder daraus abgeleiteten Werten erfolgt, **dadurch gekennzeichnet dass**
eine Anpassung mindestens eines Parameters im ersten Kommunikationsmodul (10) aus der Gruppe Datenrate und Datenraten-Offset erfolgt, derart, dass der Fehler der zweiten Frequenzreferenzeinrichtung (18) oder des davon abhängigen Parameterfehlers reduziert oder beseitigt wird, und wobei
der Fehler des vom ersten Kommunikationsmodul (10) empfangenen Funksignal in letzterem reduziert oder beseitigt wird und ein entsprechend korrigiertes Funksignal an das zweite Kommunikationsmodul (17) zurückgesendet wird.

2. Verfahren nach Anspruch 1, **dadurch gekennzeichnet, dass** eine Anpassung der Frequenz der ersten Frequenzreferenzeinrichtung (11) erfolgt, derart, dass der Fehler der zweiten Frequenzreferenzeinrichtung (18) oder des davon abhängigen Parameterfehlers reduziert oder beseitigt wird.

3. Verfahren nach Anspruch 1 oder 2, **dadurch gekennzeichnet, dass** die Bandbreite gemessen wird, aus der gemessenen Bandbreite ein Datenraten-Offset bestimmt und daraus der Fehler der zweiten Frequenzreferenzeinrichtung (18) geschätzt wird.

4. Verfahren nach mindestens einem der vorhergehenden Ansprüche, **dadurch gekennzeichnet, dass** der Phasenhub gemessen wird, aus dem gemessenen Phasenhub ein Frequenzhub bestimmt und daraus der Fehler der zweiten Frequenzreferenzeinrichtung (18) geschätzt wird.

5. Verfahren nach mindestens einem der vorhergehenden Ansprüche, **dadurch gekennzeichnet, dass**
in einer Lookup-Tabelle (15) Korrektur-Voreinstellungs-Werte für den bzw. die betreffenden Parameter vorgegeben sind,
in Abhängigkeit des geschätzten Fehlers der zweiten Frequenzreferenzeinrichtung (18) aus der vorgegebenen Menge der Korrektur-Voreinstellungs-Werte konkrete Korrektur-Voreinstellungs-Werte (f(Pn, Wn)) ausgewählt werden und
in Abhängigkeit davon die Anpassung der ersten Frequenzreferenzeinrichtung (11) erfolgt.

6. Verfahren nach mindestens einem der vorhergehenden Ansprüche , **dadurch gekennzeichnet, dass**
in Abhängigkeit des geschätzten Fehlers der zweiten Frequenzreferenzeinrichtung (18) die Hardware der ersten Frequenzreferenzeinrichtung (11) angepasst wird.

7. Verfahren nach mindestens einem der vorhergehenden Ansprüche, **dadurch gekennzeichnet, dass**
zur Übertragung der Funksignale eine FSK-Modulation angewandt wird.

8. Verfahren nach mindestens einem der vorhergehenden Ansprüche, **dadurch gekennzeichnet, dass**
zur Übertragung der Funksignale eine MSK-Modulation angewandt wird.

9. Verfahren nach mindestens einem der vorhergehenden Ansprüche, **dadurch gekennzeichnet, dass**
die Datenübertragung von dem jeweiligen zweiten Kommunikationsmodul (17) an das erste Kommunikationsmodul (10) in Bezug auf die weiteren zweiten Kommunikationsmodule (17) sukzessiv oder sequentiell erfolgt.

10. Verfahren nach mindestens einem der vorhergehenden Ansprüche, **dadurch gekennzeichnet, dass**
das Abschätzen des Fehlers der zweiten Frequenzreferenzeinrichtung (18) im Rahmen einer Integraltransformation, insbesondere einer Fourier-Transformation oder Spektral-Transformation erfolgt.

11. Verfahren nach mindestens einem der vorhergehenden Ansprüche, **dadurch gekennzeichnet, dass**
beim Empfang des Datenpakets die Empfangsfrequenz am Konzentrator derart eingestellt wird, dass das Signal in der Mitte des Empfangsfensters liegt.

12. Verfahren nach mindestens einem der vorhergehenden Ansprüche, **dadurch gekennzeichnet, dass**
das zweite Kommunikationsmodul (17) eine dritte Frequenzreferenzeinrichtung (22) umfasst und die Frequenz der dritten Frequenzreferenzeinrichtung (22) zur Ableitung der ΔFrequenz aus der zweiten Frequenzreferenzeinrichtung (18) herangezogen wird.

13. Kommunikationssystem (1) mit bidirektionaler Funkübertragung mit
einem ersten Kommunikationsmodul (10), wobei das erste Kommunikationsmodul (10) einem Datensammler (3) zugeordnet ist, zwei oder mehreren zweiten Kommunikationsmodulen (17), wobei jedes zweite Kommunikationsmodul (17) jeweils einer Messeinheit, insbesondere einem Verbrauchsmessgerät (2), zugeordnet ist,
wobei das zweite Kommunikationsmodul (17) dazu vorgesehen ist, Daten mittels Funksignalen, vorzugsweise in Form von mindestens einem vorzugsweise eine Mehrzahl von Datenpaket(en) (4) umfassenden Funktelegrammen, an das erste Kommunikationsmodul (10) zu senden,
wobei das erste Kommunikationsmodul (10) dazu vorgesehen ist, die Daten von dem zweiten Kommunikationsmodul (17) zu empfangen,
wobei das erste Kommunikationsmodul (10) eine erste Frequenzreferenzeinrichtung (11) umfasst,
wobei das zweite Kommunikationsmodul (17) eine zweite Frequenzreferenzeinrichtung (18) umfasst,
wobei die jeweils von dem zweiten Kommunikationsmodul (17) im Rahmen der Datenübertragung an das erste Kommunikationsmodul (10) übertragenen Funksignale von der zweiten Frequenzreferenzeinrichtung (18) abhängig sind,
wobei eine Einrichtung zur Korrektur der Daten aufgrund einer Abweichung zwischen der ersten Frequenzreferenzeinrichtung (11) und der zweiten Frequenzreferenzeinrichtung (18) vorgesehen ist,
wobei
das erste Kommunikationsmodul (10) eine Messeinrichtung (21) zur Messung mindestens eines Parameters des vom jeweiligen zweiten Kommunikationsmoduls (17) ausgesendeten und vom ersten Kommunikationsmodul (10) empfangenen Funksignals aus folgender Parameter-Gruppe
Bandbreite,
Datenrate,
Datenraten-Offset,
Temperatur aus dem Datenpaket,
einer aus der zweiten Frequenzreferenzeinrichtung (18) abgeleiteten ΔFrequenz,
Modulationsindex und/oder
Empfangszeit,
aufweist, und
das erste Kommunikationsmodul (10) eine Steuer- und Recheneinheit (13) umfasst, die dazu ausgebildet ist, einen Fehler der zweiten Frequenzreferenzeinrichtung (18) auf der Grundlage der Parameter-Messwerte oder daraus abgeleiteten Werten durch Schätzung zu ermitteln, **dadurch gekennzeichnet dass** das erste Kommunikationsmodul (10) zur Reduzierung oder Beseitigung der Fehler der zweiten Frequenzreferenzeinrichtung (18) oder der davon abhängige Parameterfehler ausgebildet ist, indem das erste Kommunikationsmodul (10) zur Anpassung mindestens eines Parameters aus der Gruppe Datenrate und Datenraten-Offset hergerichtet ist, und wobei
das erste Kommunikationsmodul (10) zur Reduzierung oder Beseitigung des Fehlers des vom ersten Kommunikationsmodul (10) empfangenen Funksignals und zur Rücksendung eines entsprechend korrigierten Funksignals an das zweite Kommunikationsmodul (17) ausgebildet ist.

14. Kommunikationssystem (1) nach Anspruch 13, **dadurch gekennzeichnet, dass** die erste Frequenzreferenzeinrichtung (11) zur Anpassung der eigenen Frequenz ausgebildet ist, so dass der Fehler der zweiten Frequenzreferenzeinrichtung (18) oder der davon abhängige Parameterfehler reduziert oder beseitigt wird.

15. Kommunikationssystem (1) nach Anspruch 13 oder 14, **dadurch gekennzeichnet, dass** bezüglich der Parameter Vergleichswerte (W1 bis Wn) zum Vergleich mit den gemessenen Werten hinterlegt sind und die Steuer- und Recheneinheit (13) zur Abschätzung des Fehlers der zweiten Frequenzreferenzeinrichtung (18) auf der Grundlage des Unterschieds zwischen der Vergleichswerte und der gemessenen Werte ausgebildet ist.

16. Kommunikationssystem (1) nach mindestens einem der Ansprüche 13 bis 15, **dadurch gekennzeichnet, dass**
in einer Lookup-Tabelle (15) Korrektur-Voreinstellungs-Werte (f(Pn, Wn)) für den bzw. die betreffenden Parameter vorgegeben sind,
in Abhängigkeit des geschätzten Fehlers der zweiten Frequenzreferenzeinrichtung (18) aus der vorgegebenen Menge konkrete Korrektur-Voreinstellungs-Werte (f(Pn, Wn)) davon auswählbar sind und durch entsprechende Anwahl die Anpassung der ersten Frequenzreferenzeinrichtung (11) durchführbar ist.

17. Kommunikationssystem (1) nach mindestens einem der Ansprüche 13 bis 16, **dadurch gekennzeichnet, dass** ein Stellglied (14) im ersten Kommunikationsmodul (10) vorgesehen ist, mittels dem die Frequenz des ersten Kommunikationsmoduls (10) veränderbar ist.

## Claims

1. Method for improving the transmission quality between a data collector (3) and a plurality of metering units, in particular consumption metering devices (2), in a communication system (1) with two-way radio transmission, with
a first communication module (10), wherein the first communication module (10) is assigned to the data collector (3),
two or more second communication modules (17), wherein each second communication module (17) is assigned in each case to a metering unit,
wherein the second communication module (17) is provided to transmit data by means of radio signals, preferably in the form of radio messages (4) comprising at least one, preferably a plurality of data packets, to the first communication module (10),
wherein the first communication module (10) is provided to receive the data from the second communication module (17),
wherein the first communication module (10) comprises a first frequency reference device (11),
wherein the second communication module (17) comprises a second frequency reference device (18),
wherein the radio signals transmitted in each case during the data transmission from the second communication module (17) to the first communication module (10) are dependent on the second frequency reference device (18), wherein
a measurement of at least one parameter of the radio signal transmitted by the respective second communication module (17) and received by the first communication module (10) from the following parameter group:
bandwidth,
data rate,
data rate offset,
temperature from the data packet,
a Δfrequency derived from the second frequency reference device (18),
modulation index and/or
receive time,
is carried out by the first communication module (10), wherein
an error of the second frequency reference device (18) is estimated on the basis of the parameter measured values or values derived therefrom, **characterized in that**
at least one parameter in the first communication module (10) from the group comprising data rate and data rate offset is adjusted in such a way that the error of the second frequency reference device (18) or the parameter error dependent thereon is reduced or eliminated, and wherein
the error of the radio signal received by the first communication module (10) is reduced or eliminated in the latter and a correspondingly corrected radio signal is transmitted back to the second communication module (17).

2. Method according to Claim 1, **characterized in that** the frequency of the first frequency reference device (11) is adjusted in such a way that the error of the second frequency reference device (18) or the parameter error dependent thereon is reduced or eliminated.

3. Method according to Claim 1 or 2, **characterized in that** the bandwidth is measured, a data rate offset is determined from the measured bandwidth and the error of the second frequency reference device (18) is estimated therefrom.

4. Method according to at least one of the preceding claims, **characterized in that** the phase deviation is measured, a frequency deviation is determined from the measured phase deviation and the error of the second frequency reference device (18) is estimated therefrom.

5. Method according to at least one of the preceding claims, **characterized in that**
default correction values for the parameter(s) concerned are specified in a lookup table (15),
depending on the estimated error of the second frequency reference device (18), specific default correction values (f(Pn, Wn)) are selected from the specified set of default correction values, and
the first frequency reference device (11) is adjusted depending thereon.

6. Method according to at least one of the preceding claims, **characterized in that**
the hardware of the first frequency reference device (11) is adjusted depending on the estimated error of the second frequency reference device (18).

7. Method according to at least one of the preceding claims, **characterized in that**
FSK modulation is used for the transmission of the radio signals.

8. Method according to at least one of the preceding claims, **characterized in that**
MSK modulation is used for the transmission of the radio signals.

9. Method according to at least one of the preceding claims, **characterized in that**
the data transmission from the respective second communication module (17) to the first communication module (10) is performed successively or sequentially in relation to the further second communication modules (17).

10. Method according to at least one of the preceding claims, **characterized in that**
the error of the second frequency reference device (18) is estimated via an integral transform, in particular a Fourier transform or spectral transform.

11. Method according to at least one of the preceding claims, **characterized in that**
when the data packet is received, the receive frequency is set on the concentrator in such a way that the signal is located in the middle of the receive window.

12. Method according to at least one of the preceding claims, **characterized in that**
the second communication module (17) comprises a third frequency reference device (22) and the frequency of the third frequency reference device (22) is used to derive the Δfrequency from the second frequency reference device (18).

13. Communication system (1) with two-way radio transmission, with
a first communication module (10), wherein the first communication module (10) is assigned to a data collector (3),
two or more second communication modules (17), wherein each second communication module (17) is assigned in each case to a metering unit, in particular a consumption metering device (2),
wherein the second communication module (17) is provided to transmit data by means of radio signals, preferably in the form of radio messages comprising at least one, preferably a plurality of data packets (4), to the first communication module (10), wherein the first communication module (10) is provided to receive the data from the second communication module (17),
wherein the first communication module (10) comprises a first frequency reference device (11),
wherein the second communication module (17) comprises a second frequency reference device (18),
wherein the radio signals transmitted in each case during the data transmission from the second communication module (17) to the first communication module (10) are dependent on the second frequency reference device (18),
wherein a device is provided to correct the data on the basis of a deviation between the first frequency reference device (11) and the second frequency reference device (18), wherein
the first communication model (10) has a measuring device (21) to measure at least one parameter of the radio signal transmitted by the respective second communication module (17) and received by the first communication module (10) from the following parameter group:
bandwidth,
data rate,
data rate offset,
temperature from the data packet,
a Δfrequency derived from the second frequency reference device (18),
modulation index and/or
receive time,
and
the first communication module (10) has a control and processing unit (13) which is designed to determine, through estimation, an error of the second frequency reference device (18) on the basis of the parameter measured values or values derived therefrom, **characterized in that**
the first communication module (10) is designed to reduce or eliminate the errors of the second frequency reference device (18) or the parameter errors dependent thereon by virtue of the first communication module (10) being set up to adjust at least one parameter from the group comprising data rate and date rate offset, and wherein
the first communication module (10) is designed to reduce or eliminate the error of the radio signal received by the first communication module (10) and to transmit a correspondingly corrected radio signal back to the second communication module (17).

14. Communication system (1) according to Claim 13, **characterized in that** the first frequency reference device (11) is designed to adjust its own frequency such that the error of the second frequency reference device (18) or the parameter error dependent thereon is reduced or eliminated.

15. Communication system (1) according to Claim 13 or 14, **characterized in that** comparative values (W1 to Wn) are stored in relation to the parameters for comparison with the measured values, and the control and processing unit (13) is designed to estimate the error of the second frequency reference device (18) on the basis of the difference between the comparative values and the measured values.

16. Communication system (1) according to at least one of Claims 13 to 15, **characterized in that**
default correction values (f(Pn, Wn)) for the parameter(s) concerned are specified in a lookup table (15),
depending on the estimated error of the second frequency reference device (18), specific default correction values (f(Pn, Wn)) are selectable from the specified set and the adjustment of the first frequency reference device (11) can be performed through corresponding selection.

17. Communication system (1) according to at least one of Claims 13 to 16, **characterized in that** a final control element (14) is provided in the first communication module (10), by means of which the frequency of the first communication module (10) is modifiable.

## Revendications

1. Procédé permettant d'améliorer la qualité de transmission entre un collecteur de données (3) et une pluralité d'unités de mesure, en particulier de compteurs de consommation (2), dans un système de communication (1) à transmission radio bidirectionnelle, comprenant
un premier module de communication (10), le premier module de communication (10) étant associé au collecteur de données (3),
deux ou plusieurs deuxièmes modules de communication (17), chaque deuxième module de communication (17) étant respectivement associé à une unité de mesure,
le deuxième module de communication (17) étant prévu pour envoyer des données au premier module de communication (10) au moyen de signaux radio, de préférence sous la forme de radiogrammes (4) comprenant au moins un, de préférence une pluralité, de paquet(s) de données,
le premier module de communication (10) étant prévu pour recevoir les données du deuxième module de communication (17),
le premier module de communication (10) comprenant un premier dispositif de référence de fréquence (11),
le deuxième module de communication (17) comprenant un deuxième dispositif de référence de fréquence (18),
les signaux radio transmis respectivement par le deuxième module de communication (17) au premier module de communication (10) dans le cadre de la transmission de données dépendant du deuxième dispositif de référence de fréquence (18), dans lequel
une mesure d'au moins un paramètre du signal radio envoyé par le deuxième module de communication (17) respectif et reçu par le premier module de communication (10), issu du groupe de paramètres suivant
bande passante,
débit de données,
décalage de débit de données,
température provenant du paquet de données, fréquence delta dérivée du deuxième dispositif de référence de fréquence (18),
indice de modulation, et/ou
heure de réception,
est effectuée par le premier module de communication (10), dans lequel
une estimation d'une erreur du deuxième dispositif de référence de fréquence (18) est effectuée sur la base des valeurs de mesure de paramètre ou de valeurs dérivées de celles-ci,
**caractérisé en ce que**
une adaptation d'au moins un paramètre dans le premier module de communication (10), issu du groupe composé du débit de données et du décalage de débit de données, est effectuée de telle sorte que l'erreur du deuxième dispositif de référence de fréquence (18) ou l'erreur de paramètre qui en dépend est réduite ou éliminée, et dans lequel
l'erreur du signal radio reçu par le premier module de communication (10) est réduite ou éliminée dans celui-ci, et un signal radio corrigé en conséquence est renvoyé au deuxième module de communication (17).

2. Procédé selon la revendication 1, **caractérisé en ce qu'**une adaptation de la fréquence du premier dispositif de référence de fréquence (11) est effectuée de telle sorte que l'erreur du deuxième dispositif de référence de fréquence (18) ou l'erreur de paramètre qui en dépend est réduite ou éliminée.

3. Procédé selon la revendication 1 ou 2, **caractérisé en ce que** la bande passante est mesurée, un décalage de débit de données est déterminé à partir de la bande passante mesurée, et une erreur du deuxième dispositif de référence de fréquence (18) est estimée à partir de celui-ci.

4. Procédé selon au moins l'une des revendications précédentes, **caractérisé en ce que** la déviation de phase est mesurée, une déviation de fréquence est déterminée à partir de la déviation de phase mesurée, et l'erreur du deuxième dispositif de référence de fréquence (18) est estimée à partir de celle-ci.

5. Procédé selon au moins l'une des revendications précédentes, **caractérisé en ce que**
dans une table de consultation (15), des valeurs de correction par défaut sont prédéfinies pour le ou les paramètres concernés,
en fonction de l'erreur estimée du deuxième dispositif de référence de fréquence (18), des valeurs de correction par défaut concrètes (f(Pn, Wn)) sont sélectionnées dans la quantité prédéfinie des valeurs de correction par défaut, et
l'adaptation du premier dispositif de référence de fréquence (11) est effectuée en fonction de celles-ci.

6. Procédé selon au moins l'une des revendications précédentes, **caractérisé en ce que** le matériel du premier dispositif de référence de fréquence (11) est adapté en fonction de l'erreur estimée du deuxième dispositif de référence de fréquence (18).

7. Procédé selon au moins l'une des revendications précédentes, **caractérisé en ce qu'**une modulation FSK est appliquée pour la transmission des signaux radio.

8. Procédé selon au moins l'une des revendications précédentes, **caractérisé en ce qu'**une modulation MSK est appliquée pour la transmission des signaux radio.

9. Procédé selon au moins l'une des revendications précédentes, **caractérisé en ce que** la transmission de données du deuxième module de communication (17) respectif au premier module de communication (10) est effectuée de manière successive ou séquentielle par rapport aux autres deuxièmes modules de communication (17) .

10. Procédé selon au moins l'une des revendications précédentes, **caractérisé en ce que** l'estimation de l'erreur du deuxième dispositif de référence de fréquence (18) est effectuée dans le cadre d'une transformation intégrale, en particulier d'une transformation de Fourier ou d'une transformation spectrale.

11. Procédé selon au moins l'une des revendications précédentes, **caractérisé en ce qu'**à la réception du paquet de données, la fréquence de réception au niveau du concentrateur est réglée de telle sorte que le signal se situe au milieu de la fenêtre de réception.

12. Procédé selon au moins l'une des revendications précédentes, **caractérisé en ce que** le deuxième module de communication (17) comprend un troisième dispositif de référence de fréquence (22), et la fréquence du troisième dispositif de référence de fréquence (22) est utilisée pour dériver la fréquence delta du deuxième dispositif de référence de fréquence (18).

13. Système de communication (1) à transmission radio bidirectionnelle, comprenant
un premier module de communication (10), le premier module de communication (10) étant associé au collecteur de données (3),
deux ou plusieurs deuxièmes modules de communication (17), chaque deuxième module de communication (17) étant respectivement associé à une unité de mesure, en particulier à un compteur de consommation (2),
le deuxième module de communication (17) étant prévu pour envoyer des données au premier module de communication (10) au moyen de signaux radio, de préférence sous la forme de radiogrammes comprenant au moins un, de préférence une pluralité, de paquet (s) de données (4),
le premier module de communication (10) étant prévu pour recevoir les données du deuxième module de communication (17),
le premier module de communication (10) comprenant un premier dispositif de référence de fréquence (11),
le deuxième module de communication (17) comprenant un deuxième dispositif de référence de fréquence (18),
les signaux radio transmis respectivement par le deuxième module de communication (17) au premier module de communication (10) dans le cadre de la transmission de données dépendant du deuxième dispositif de référence de fréquence (18),
dans lequel un dispositif pour corriger les données sur la base d'une déviation entre le premier dispositif de référence de fréquence (11) et le deuxième dispositif de référence de fréquence (18) est prévu,
dans lequel le premier module de communication (10) présente un dispositif de mesure (21) pour mesurer au moins un paramètre du signal radio envoyé par le deuxième module de communication (17) respectif et reçu par le premier module de communication (10), issu du groupe de paramètres suivant
bande passante,
débit de données,
décalage de débit de données,
température provenant du paquet de données, fréquence delta dérivée du deuxième dispositif de référence de fréquence (18),
indice de modulation, et/ou
heure de réception, et
le premier module de communication (10) comprend une unité de commande et de calcul (13) qui est réalisée pour établir par estimation une erreur du deuxième dispositif de référence de fréquence (18) sur la base des valeurs de mesure de paramètre ou de valeurs dérivées de celles-ci,
**caractérisé en ce que**
le premier module de communication (10) est réalisé pour réduire ou éliminer les erreurs du deuxième dispositif de référence de fréquence (18) ou les erreurs de paramètres qui en dépendent **en ce que** le premier module de communication (10) est aménagé pour adapter au moins un paramètre issu du groupe composé du débit de données et du décalage de débit de données, et dans lequel
le premier module de communication (10) est réalisé pour réduire ou éliminer l'erreur du signal radio reçu par le premier module de communication (10) et pour renvoyer au deuxième module de communication (17) un signal radio corrigé en conséquence.

14. Système de communication (1) selon la revendication 13, **caractérisé en ce que** le premier dispositif de référence de fréquence (11) est réalisé pour adapter sa propre fréquence de sorte que l'erreur du deuxième dispositif de référence de fréquence (18) ou l'erreur de paramètre qui en dépend est réduite ou éliminée.

15. Système de communication (1) selon la revendication 13 ou 14, **caractérisé en ce que** concernant les paramètres, des valeurs de comparaison (W1 à Wn) pour une comparaison avec les valeurs mesurées sont enregistrées, et l'unité de commande et de calcul (13) est réalisée pour estimer l'erreur du deuxième dispositif de référence de fréquence (18) sur la base de la différence entre les valeurs de comparaison et les valeurs mesurées.

16. Système de communication (1) selon au moins l'une des revendications 13 à 15, **caractérisé en ce que**
dans une table de consultation (15), des valeurs de correction par défaut (f(Pn, Wn)) sont prédéfinies pour le ou les paramètres concernés,
en fonction de l'erreur estimée du deuxième dispositif de référence de fréquence (18), des valeurs de correction par défaut concrètes (f(Pn, Wn)) peuvent être sélectionnées dans la quantité prédéfinie, et une sélection adéquate permet d'effectuer l'adaptation du premier dispositif de référence de fréquence (11).

17. Système de communication (1) selon au moins l'une des revendications 13 à 16, **caractérisé en ce qu'**un actionneur (14) est prévu dans le premier module de communication (10), qui permet de modifier la fréquence du premier module de communication (10).
